# EUROPEAN PATENT APPLICATION

(11) **EP 2 177 987 A1**
(43) Date of publication of application: **21.04.2010**
(21) Application number: 08305694.5
(22) Date of filing: 17.10.2008
(51) Int. Cl.: G06F 9/45, G06F 9/30

(54) **A method for handling different types of data, corresponding device, storage means, and software program therefore**

(71) Applicant: Alcatel Lucent, 75008 Paris (FR)
(72) Inventor: Verhulst, Dieter, 9040, St. Amandsberg (BE); Cautereels, Paul, 2880, Hingene (BE)
(74) Representative: Brose, Gerhard

(57) **Abstract**

The invention concerns a method for handling different types of data (112) comprising a plurality of bytes, the method comprising the steps of accessing the data and attributing (102) a type (111) to the data (112) for indicating a byte order of the data (112). The invention further concerns a corresponding device, storage means, and software program (100) therefore.

## Description

The invention relates to a method for handling different types of data comprising a plurality of bytes according to the preamble of claim 1, a programmable device according to the preamble of claim 8, storage means according to the preamble of claim 9, and a software program according to the preamble of claim 10.

In computing, endianness is the byte or bit ordering used to represent some kind of data. For example, endianness may refer to the order in which integer values are stored as bytes in computer memory relative to a given memory addressing scheme or to the transmission order over a network or other medium. Endianness thus serves as an important attribute of a particular data representation format. When applied in the art specifically to the ordering of bytes, endianness is also sometimes called byte order.

For the purpose of this document, by byte is meant a unit of measurement of information representation that typically, but not necessarily, consists of eight binary digits (bits), in which case it is also referred to as an octet. It should be noted that varying byte sizes may be used in different computer architectures.

Most modern computer processors agree on the ordering of bits within a single byte. This means that any single-byte value will be read the same on almost any computer one may send it to. However, integers tod large to be represented by a single byte are usually stored as sequences of bytes, so that the encoded value can be obtained by simple concatenation according to the agreed-upon byte order.

The two most commonly encountered byte orders are according to increasing numeric significance, know as little-endian, and its opposite, most-significant byte first, called big-endian. Well known processor architectures that use the little-endian format include MOS Technology 6502, Zilog Z80, Intel 8086, Digital VAX, and, largely, Digital PDP-11. Other processors such as Motorola 6800 and 68000, IBM PowerPC, IBM System/370, and Sun SPARC adopt the big-endian format. Networks such as the Internet generally use big-endian order, hence called network order by those in the art, when sending information over a network in a common format.

Consequently, endianness is an important consideration in network programming, where a plurality of computers with different byte orders may be communicating. Failure to account for varying endianness when writing code for mixed platforms may lead to errors that can be difficult to detect. A method for avoiding such errors using the commonly employed C programming language has been proposed in the Internet article "Writing endian-independent code in C" available at "http;//www.ibm.com/developerworks/aix/library/au-endianc". The author suggests including into C source code a function definition to enable conversion between big-endian and little-endian formats. Further, the article teaches calling the conversion function explicitly from the source code whenever a change in byte order is required.

A downside of the proposed approach is its reliance on the application programmer to exhaustively identify all operations that may require byte order conversion and generate or modify the source code accordingly. Furthermore, the sheer number of explicit calls to the conversion function greatly increases source code size and hinders maintenance of the resulting software. It is thus an object of the invention to provide a solution to the problem of byte order conversion that is less error-prone and avoids any unnecessary bloat of the affected source code.

This object is achieved by a method according to claim 1, a programmable device according to claim 8, storage means according to claim 9, and a software program according to claim 10.

A main idea of the invention is to instrument source code by defining specific data types to be attributed to data represented using any of the big-endian or little-endian formats. These types may then be used independently of the architecture of the target system, which would otherwise impose a particular byte order onto the application programmer. Transformation between different byte orders remains transparent to the application programmer due to the implicit type conversion effected by the language environment,

Further developments of the invention can be gathered from the dependent claims and the following description.

In the following the invention will be explained further masking reference to the attached drawing.

To convert, according to an embodiment of the invention, a representation format of data comprising a plurality of bytes, a type is attributed to the data for indicating a byte order of the data. In response to storing the data in a computer memory and/or loading the data from the computer memory, the least significant byte (LSB) of the data and the most significant byte (MSB) of the data are swapped. This swapping depends on the type and is conditional upon an architecture of the computer memory.

In this context, by LSB is meant the byte in that position of the data representation which has the least potential value. Accordingly, by MSB is meant the byte in that position with the greatest potential value.

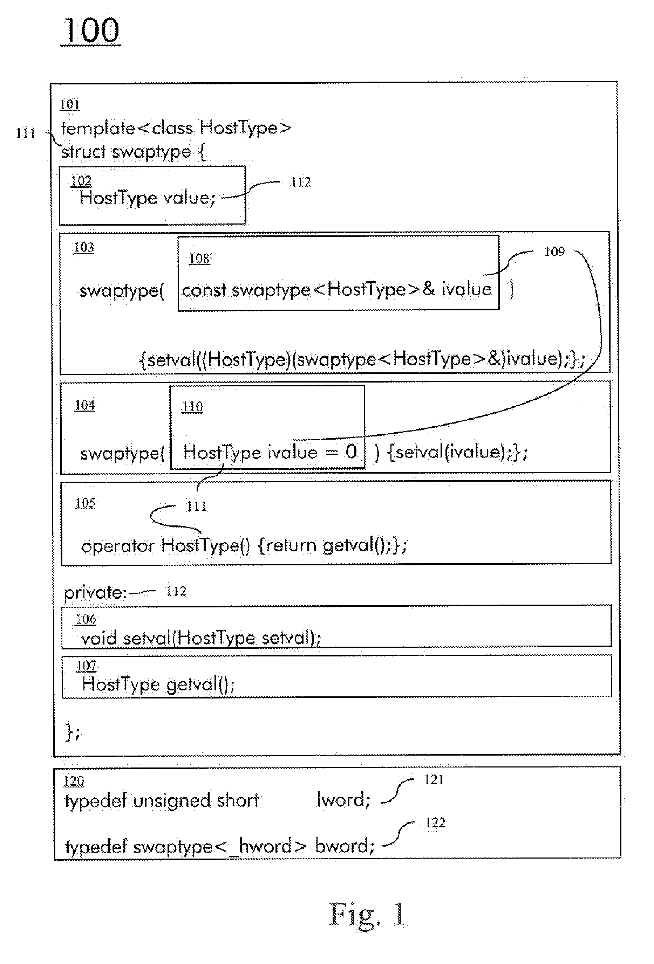

Fig. 1 shows a C++ code excerpt defining two data types for use with an embodiment of the invention.

In the following, a method according to the invention is elucidated by way of example, referencing Fig. 1.

Specifically, Fig. 1 shows a translation unit 100 comprising a class declaration 101 and typedef declarations 120. While the typedef declarations 120 comprise a typedef name "lword" 121 and a typedef name "bword/' 122, the class declaration 101 comprises a "struct" keyword 111, a data member "swaptype::value" 102, a first constructor 103, a second constructor 104, a conversion function 105, a "private" keyword 112, a member function "swaptype:tsetval" 106, and a member function "swaptype::getval" 107. The data member "swaptype::rvalue" 102 contains a "value" variable 112; the first constructor 103 contains a first parameter list 108; and the second constructor 104 contains a second parameter list 110. Finally, the first parameter list 108 and the second parameter list 110 each comprise an identifier "lvalue" 109, and the second constructor 104 and the conversion function 105 each comprise a type "HostType" 111.

The example of Fig. 1 uses the C++ programming language to define two data types for use with an embodiment of the invention, The C++ programming language as used in this example was ratified as ISO/IEC 1488:2003.

The translation unit 100 comprises a class declaration 101, introducing the name "swaptype" into the translation unit 100 and specifying the interpretation and attributes of this name. The class declaration 101 takes the form of a template declaration, using "class HostType" as a template parameter and thus introducing the "HostType" identifier as a placeholder to denote the type of data to be converted.

The class declaration 101 defines the class name "swaptype" along with the data member "swaptype::value" 102 of type "HostType". Due to the semantics of the class declaration 101, the data member 102 always stores its contents in big-endian format.

The class declaration 101 further defines the first constructor 103 of "swaptype". The first constructor 103 does not have a name. A special declarator syntax using the constructor's class name "swaptype" followed by the first parameter list 108 is used to define the first constructor 103. The first constructor 103 is used to initialize objects of its class type "class swaptype", the first parameter list 108 determining the argument that can be specified, and its processing, when the function is called. In particular, the parameter list is used to convert the argument specified on the function call. The identifier "ivalue" 109 is provided and names the parameter, sometimes called formal argument, of the first constructor 103. Since the only parameter is of type "const swaptype<HostType>&", the first constructor 103 takes the form of a copy constructor.

Similarly, the class declaration 101 defines the second constructor 104 of "swaptype". The second constructor 104 does not have a name. Again, a special declarator syntax using the constructor's class name "swaptype" followed by the second parameter list 110 is used to define the second constructor 104. Like the first constructor 103, the second constructor 104 is used to initialize objects of its class type "class swaptype", the second parameter list 110 determining the argument that can be specified, and its processing, when the function is called. In particular, the parameter list is used to convert the argument specified on the function call. The identifier "ivalue" 109 is provided and names the parameter, sometimes called formal argument, of the second constructor 104.

In the case of the second constructor 104, the default argument expression "HostType ivalue = 0" constitutes the second parameter list 110. This default argument will be used in calls to the second constructor 104 where trailing arguments are missing. The second constructor 104 may thus be called with zero or one argument of type "HostType" 111. The default argument expression is implicitly converted to the parameter type "HostType" 111.

Further, the declaration 100 defines the conversion function 105 of "swaptype" The conversion function specifies a conversion from "swaptype" to the type "HostType" 111. "HostType" is commonly referred to as the conversion type identifier of the conversion function 105. Neither parameter types nor a return type are specified for the conversion function 105. Instead, the conversion function 105 by definition takes no parameters and returns "HostType".

The first constructor 103, second constructor 104, and conversion function 105 are declared in the definition of the class "swaptype" and thus constitute member functions of that class. Since these member functions are not only declared, but also defined in their class definition, the take the form of inline member functions. This property indicates to the C++ implementation that inline substitution of the function body at the point of call is to be preferred to the conventional function call mechanism. An implementation is however not required to perform this inline substitution at the point of call.

By default, the first constructor 103, the second constructor 104, and the conversion function 105 are public since their associated class "swaptype" is defined using the "struct" keyword 111. That is, their names can be used anywhere without access restriction.

The class declaration 101 further declares the member functions "swaptype::setval" 106 and "swaptype::getval" 107. The "private" keyword 112 specifies the access rules for the members following it until the end of the "swaptype" class, that is, for the member functions "swaptype::setval" 106 and "swaptype::getval" 107. More specifically, the "private" keyword 112 used as an access specifier indicates that the names "swaptype::setval" and "swaptype::getval" may be used only by members of the class "swaptype" in which they are declared. Given the class declaration 101, these members are the first constructor 103, the second constructor 104, the conversion function 105, and the member functons "swaptype::setval" 106 and "swaptype::getval" 107.

The member function "swaptype::setval" 106 constitutes what is known in the art of object-oriented programming as a setter or mutator method, that is, a method used to control changes to the "value" variable 112. The member function "swaptype::setval" 106 is used in keeping with the principle of encapsulation. According to this principle, member variable such as "value" of a class such as "swaptype" are made private to hide and protect them from other code, and can only be modified by a member function, namely the mutator, which takes the desired new value as a parameter, optionally validates it, and modifies the private member variable.

In the embodiment at hand, the setter is accompanied by a getter or accessor method, namely the member function. "swaptype::getval" 107, which basically returns the current value of the "value" variable 112.

The low-level functionalities of storing the data contained in the "value" variable 112 in a computer memory and loading that data from the computer memory are thus triggered by the member functions "swaptype::setvel" 106 and "swaptype::getval" 107, respectively, in accordance with the underlying operating system. According to the embodiment of the invention, these member functions swap the LSB and the MSB of the data based upon the type and the architecture of the computer memory. For example, in case of a 16-bit architecture, the data may consist of two octets, swapping of which would effectively implement a conversion from big-endian to little-endian format or vice versa.

Note that the number of bits that constitute a byte is implementation-defined in the C++ language. In the example above, a preferred implementation would define the size of a byte to be eight bits, hence simplifying the swapping of octets for the member functions "swaptype::setval" 106 and "swaptype::getval" 107 as C++ associates with each byte a unique address. The byte thus forms a fundamental storage unit in the C++ memory model.

Without deviating from the spirit of the invention, the data to be converted may comprise three or more bytes. Again in this case, the swapping is based upon the type and the architecture of the computer memory and thus implementation-specific.

Finally, the translation unit 100 comprises declarations of the typedef names "lword" 121 and "bword" 122. The identifiers "lword" and "bword" can thus be used later for naming the fundamental type "unsigned short" and the compound type "swaptype<_hword>", respectively. The typedef names "lword" 121 and "bword" 122 thus become synonyms for these types.

In an alternative embodiment for execution on a big-endian as opposed to a little-endian architecture, the application developer ma simply adapt the source code by redefining "lword" to mean "swaptype<_hword>" and "bword" to denote "unsigned short". This approach bears the additional advantage of increasing portability and simplifying migration of the instrumented code to other hardware platforms.

The method is implemented in a preferred embodiment through or together with a software program written in e.g. Very high speed integrated circuit Hardware Description Language (VHDL) or G, C++, Java., or using another programming language, or implemented by one or more VHDL, C, C++, or Java processes or routines, or several software modules being executed on at least one hardware device. Alternatively, the method is implemented in hardware only, e.g. making use of an ASIC. The described embodiments are to be considered in all respects only as illustrative and not restrictive. Furthermore, the order of the steps for performing the invention is not critical, and as can be understood by those skilled in the art, the order may vary without departing from the scope of the invention.

The programmable device can be any kind of device which can be programmed including e.g. any kind of computer like a server or a personal computer, an FPGA, a processor, or the like, or any combination thereof, e.g. one processor and two FPGAs.

The storage means could be any kind of data repository in any storage medium such as a CD or disk, e.g. USB memory stick or any kind of memory, e.g. at least one RAM or ROM, or the like, or any combination thereof, e.g. one ROM and two RAMs, or two disks, etc.

The software program is a set of instructions which could be created using JAVA, C, C++, HTML, LISP, or another programming language.

## Claims

1. A method for handling different types of data (112) comprising a plurality of bytes, the method comprising the step of accessing the data,
**characterized in that** the method further comprises the step of attributing (102) a type (111) to the data (112) for indicating a byte order of the data (112).

2. A method according to claim 1, **characterized in that** the method further includes the step of, in response to the data (112) being accessed (106, 107), swapping a least significant byte of the data (112) and a most significant byte of the data (112), wherein the swapping of the least significant byte and the most significant byte depends upon the type (111), is conditional upon an architecture of a computer memory, and is effected in response to at least one of the following:
storing (106) the data (112) in the computer memory and
loading (107) the data (112) from the computer memory.

3. A method according to claim 1, **characterized in that**, in order to attribute a type (111) to the data (112), the method comprises indicating whether the bytes of the data (112) are arrayed in an ascending order with increasing numeric significance or in a descending order with increasing numeric significance.

4. A method according to claim 1, **characterized in that**, in order to make the swapping of the least significant byte and the most significant byte conditional upon the architecture of the computer memory, the method comprises matching the byte order of the data (112) and the architecture of the computer memory.

5. A method according to claim 1, **characterized in that** the computer memory is a random access memory and the method comprises storing the data (112) in the random access memory.

6. A method according to claim 5, **characterized in that** the data (112) is stored as a sequence of the most significant byte and the least significant byte.

7. A method according to claim 1, **characterized in that** the method comprises storing the data (112) in a register of a processor coupled to the computer memory.

8. A programmable device comprising storage means with a software program (100) recorded thereon, the software program (100) comprising instructions (101, 120) which, when executed on the device, cause the device to carry out the steps of,
in response to data (112) being accessed (106, 107), swapping a least significant byte of the data (112) and a most significant byte of the data (112),
**characterized in that** the instructions (101, 120), when executed on the device, further cause the device to carry out the step of attributing (102) a type (111) to the data (112) for indicating a byte order of the data (112),
wherein the swapping of the least significant byte and the most significant byte depends upon the type (111), is conditional upon an architecture of a computer memory, and is effected in response to at least one of the following:
storing (106) the data (112) in the computer memory and
loading (107) the data (112) from the computer memory.

9. Storage means having a software program (100) recorded thereon, the software program (100) comprising instructions (101, 120) adapted to perform, when the program (100) is executed on a programmable device, the step of,
in response to data (112) being accessed, swapping a least significant byte of the data (112) and a most significant byte of the data (112),
**characterized in that** the instructions (101, 120) are further adapted to perform, when the program (100) is executed on the programmable device, the step of attributing (102) a type (111) to the data for indicating a byte order of the data (112),
wherein the swapping of the least significant byte and the most significant byte depends upon the type (111), is conditional upon an architecture of a computer memory, and is effected in response to at least one of the following:
storing (106) the data (112) in the computer memory and
loading (107) the data (112) from the computer memory.

10. A software program (100) for converting a representation format of data (112) comprising a plurality of bytes, the software program (100) comprising instructions (101, 120) for performing the step of,
in response to the data (US) being accessed (106, 107), swapping a least significant byte of the data (11.2) and a most significant byte of the data (112),
**characterized in that** the method further comprises the step of attributing a type (111) to the data (112) for indicating a byte order of the data (112),
wherein the swapping of the least significant byte and the most significant byte depends upon the type (111), is conditional upon an architecture of a computer memory, and is effected in response to at least one of the following:
storing (106) the data (112) in the computer memory and
loading (107) the data (112) from the computer memory.
